# EUROPEAN PATENT SPECIFICATION

(11) **EP 1 029 776 B1**
(45) Date of publication and mention of the grant of the patent: **10.05.2006**
(21) Application number: 00200136.0
(22) Date of filing: 14.01.2000
(51) Int. Cl.: B62J 6/04

(54) **Bicycle lamp**
Fahrradleuchte
Feu pour bicyclette

(30) Priority: 19.02.1999 NL 1011343
(43) Date of publication of application: 23.08.2000
(73) Proprietor: Spanninga Metaal B.V., 8501 MK Joure (NL)
(72) Inventor: Vellinga, Jacob, 8502 AL Joure (NL)
(74) Representative: Veldman-Dijkers, Cornelia G. C.

(56) References cited:
- CH-A- 682 142
- DE-A- 4 433 882
- GB-A- 2 184 824

## Description

The invention relates to a bicycle lamp comprising a light source extending along a central light axis, in particular a light-emitting diode and a cover disposed in front of the light source, which comprises a light distributor.

In a similar bicycle lamp known from European patent application EP-A2-0,755,850 which is used as the rear light of a bicycle, for example, the light source comprises a light-emitting diode. The advantage of a light-emitting diode in comparison with an incandescent lamp is that a light-emitting diode will generally have a longer life. In addition, a light-emitting diode consumes significantly less energy, which is particularly important when batteries are used as the light source. One drawback of light-emitting diode, however, is the fact that its light emission angle is generally relatively small. The law requires a specific light distribution, for example ranging between 110° to the left-hand side sand 110° to the right-hand side. The terms "left-hand side" and "right-hand side" and similar designations are used herein to indicate positions relative to a bicycle lamp present on a moving bicycle.

With the bicycle lamp known from EP-A2-0,755,850 the light from the light-emitting diode is diffused by means of a light distributor present in the cover. The light distributor comprises a lens positioned on the central axis and two optical elements disposed above and below the lens, respectively. The optical element comprises a plurality of surfaces extending at an angle with respect to each other. The surfaces extend at such an angle with respect to each other that the optical elements is fully reflecting. Since the optical elements disposed above and below the central axis are spaced from the light-emitting diode by some distance, relatively little light will be reflected, however. Another drawback of this prior art light distributor is that it is relatively complicated, due to the presence of both a lens and two optical elements. The manufacture of an injection mould for a cover provided with such a light distributor is relatively costly, therefore

Another bicycle lamp according to the preamble of claim 1 is known from GB-A-2,184,824. The bicycle lamp is provided with a light distributor comprising a plurality of surfaces extending at different angles with respect to each other. Such a light distributor is relatively complicated to manufacture.

The object of the invention is to provide a bicycle lamp wherein the light from the light source is distributed through a desired angle in a simple manner.

This objective is accomplished with the bicycle lamp according to the invention in that the light distributor comprises at least one wall part which is V-shaped both on a side facing towards the light source and on a side facing away from the light source, which V-shaped wall part comprises facing inner surfaces positioned on the side facing towards the light source, which inner surfaces intersect each other at the central light axis, wherein the V-shaped part furthermore comprises outer surfaces positioned on the side away from the light source, which outer surfaces being parallel to the inner surfaces.

The surfaces may be interconnected on the central axis or be connected by means of a surface extending transversely to the central axis, for example.

Light from the light source, for example a light-emitting diode, will partially pass through the wall part and partially be reflected by said surfaces. The angle between the surfaces is selected so that a desired angular distribution of the light is achieved.

In addition, the light will be partially reflected by surfaces of the V-shaped wall part disposed on the side facing away from the light source.

The invention will be explained in more detail hereafter with reference to the drawings, in which:
Figure 1 is a perspective view of a part of a bicycle lamp according to the invention;
Figure 2 is a cross-sectional view of the bicycle lamp which is shown in Figure 1;
Figure 3 is a front view of the bicycle lamp which is shown in Figure 1;
Figure 4 is a top plan view of the bicycle lamp which is shown in Figure 1;
Figure 5 is a longitudinal sectional view of the bicycle lamp which is shown in Figure 1;
Figure 6 is a bottom plan view of the bicycle lamp which is shown in Figure 1; and
Figures 7 and 8 show embodiments of a light distributor of the bicycle lamp according to the invention which is shown in Figure 1.

Parts corresponding to each other are indicated by the same numerals in the figures. In the figures, X,Y,Z-axes indicate, respectively, a horizontally rearward direction, a horizontal direction extending transversely thereto, and a vertically upward direction.

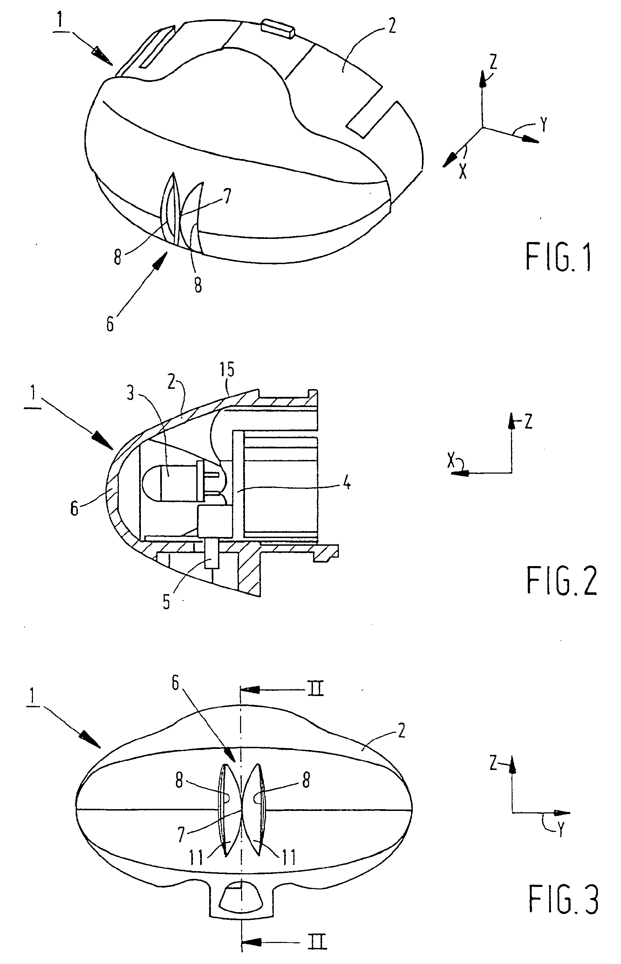

Figures 1 - 6 show various views of a bicycle lamp 1 according to the invention, which comprises a light-transmitting cover 2, which may for example be made of PMMA or PC. Disposed in cover 2 is a light-emitting diode 3, which is connected to a printed circuit board 4. Further connected to printed circuit board 4 is a switch 5 disposed on a bottom side of cover 2. Printed circuit board 4 and switch 5 do not form part of the invention and will not be explained in detail herein, therefore.

The cover 2 of bicycle lamp 1 includes a light distributor 6, which comprises a V-shaped wall part 7 and parts 8 disposed on either side thereof.

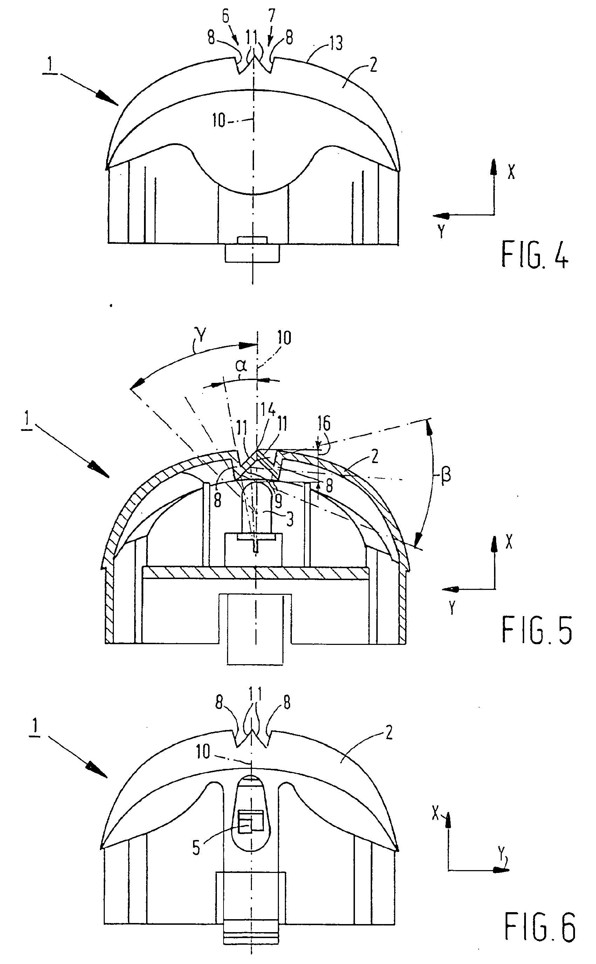

As is shown most clearly in Figure 5, the V-shaped wall part 7 comprises two facing surfaces 9 on a side facing towards light-emitting diode 3, which surfaces intersect each other near a central axis 10 extending parallel to the X-axis. V-shaped wall part 7 comprises surfaces 11 on a side facing away from light-emitting diode 3, which surfaces likewise intersect each other near central axis 10. Joining V-shaped wall part 7 on either side thereof are parts 8, which are connected to spherical cover 2 on a side facing away from V-shaped wall part 7. Cover 2 has a line of curvature 13. The V-shaped wall part 7 of the bicycle lamp which is shown in Figures 1 - 6 is so dimensioned that the intersecting line 14 of surfaces 11 lies on said line of curvature 13.

As is clearly shown in Figure 2, cover 2 also has a curvature 15 in a plane transversely to the Y-direction. Due to said curvature 15, the surfaces 11 have a curved appearance in the front view of Figure 3.

The operation of the bicycle lamp as shown in Figures 1 - 6 will now be explained in more detail with respect to Figure 5. The light from light-emitting diode 3 will be partially transmitted by surfaces 9, after which the light will exit the V-shaped wall part 7 via surfaces 11. The light that partially exits from surfaces 11 forms a light beam extending through an angle α on either side of central axis 10. Said angle α will for example be 12°. Said angle α has been selected so that a measuring point of 10° from central axis 10 imposed by the law will fall within said angle.

The light reflected by a surface 9 or a surface 11 is deflected and will exit cover 2 through an angle β. Angle β extends on either side of central axis 10, for example ranging between 70° and 110°.

Light-emitting diode 3 is further spaced from intersecting line 14 by such a distance 16 and V-shaped wall part 7 is further dimensioned such that the light from light-emitting diode 3 can exit cover 2 at an angle of for example 45° without having passed through light distributor 7. This may for example be a condition which is imposed by law.

Accordingly, the light from a single light-emitting diode 3 is distributed over a desired angle in a simple and efficient manner by the V-shaped wall part 7 of the light distributor 6 according to the invention.

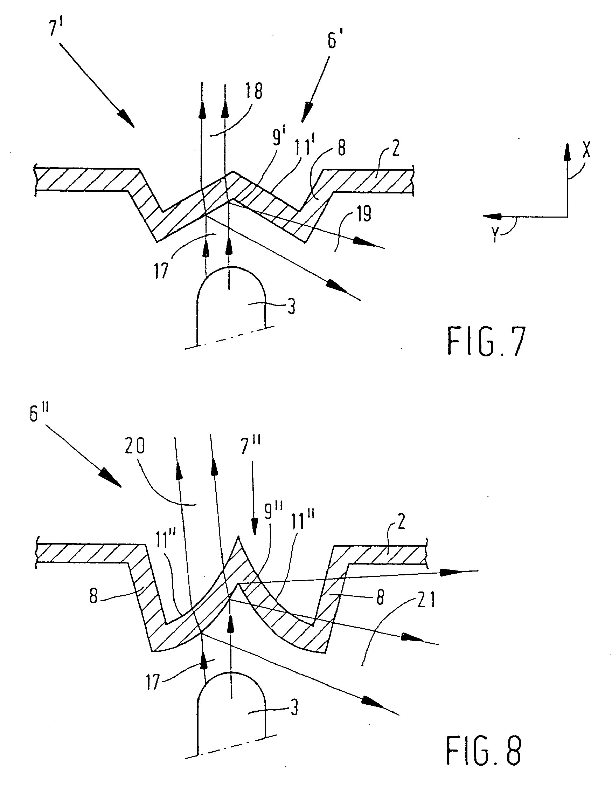

Figures 7 and 8 show a light distributor 6' and 6'', respectively, which are suitable for use as light distributor 6 in the bicycle lamp 1 which is shown in Figures 1 - 6.

The V-shaped wall part 7' of the light distributor 6' which is shown in Figure 7 comprises parallel surfaces 9' and 11'. The light 17 from light-emitting diode 3 will partially exit through surface 11' of V-shaped wall part 7' in a light beam 18. The light beam 18 extends parallel to beam 17. Light beam 18 is staggered in Y-direction with respect to light beam 17. Part of the light beam 17 will be reflected as light beam 19 by the surface 9' of V-shaped wall part 7'.

The V-shaped wall part 7'' of the light distributor 6'' which is shown in Figure 8 comprises convex surface 9'' and surfaces 11'' extending concentrically thereto. Due to the presence of said convex surfaces 9'', 1'', a light beam 17 from light-emitting diode 3 will form a light beam 20 upon exiting from surfaces 11'', which light beam is not fully parallel to beam 17 and which is moreover wider than the beam 18 of the light distributor 6' that is shown in Figure 7. Also the part 21 of light beam 17 that is reflected by wall part 9'' extends through a larger angle than the reflected light beam 19 of the light distributor 6' which is shown in Figure 7.

The form of surfaces 9 and 11 of the light distributor 6 of the bicycle lamp 1 which is shown in Figures 1 - 6 can be selected in dependence on the desired distribution of the light from light-emitting diode 3 that exits cover 2.

It is also possible for cover 2 to join the V-shaped wall part 7 directly, wherein the wall part 7 is positioned substantially entirely before line of curvature 13.

It is also possible for surfaces 9, 11 to be concave or spherical or have any other curved form.

Furthermore it is possible to interconnected the surfaces 9 disposed on either side of the central axis by means of a relatively small intermediate surface extending transversely to the central axis.

## Claims

1. A bicycle lamp (1) comprising a light source (3) extending along a central light axis (10), in particular a light-emitting diode (3) and a cover (2) disposed in front of the light source (3), which comprises a light distributor (6), **characterized in that** the light distributor (6) comprises at least one wall part (7) which is V-shaped both on a side facing towards the light source (3) and on a side facing away from the light source (3), which V-shaped wall part (7) comprises facing inner surfaces (9) positioned on the side facing towards the light source (3), which inner surfaces (9) intersect each other at the central light axis (10), wherein the V-shaped part (7) furthermore comprises outer surfaces (11) positioned on the side away from the light source (3), which outer surfaces (11) being parallel to the inner surfaces (9).

2. A bicycle lamp according to claim 1, **characterized in that** said surfaces (9, 11) extend substantially parallel to a vertical axis (7) extending transversely to said central light axis.

3. A bicycle lamp according to claim 1 or 2, **characterized in that** said surfaces (9, 11) are convex.

4. A bicycle lamp according to claim 3, **characterized in that** a side of the V-shaped wall part (7) facing away from the light source (3) extends concentrically with respect to said surfaces.

5. A bicycle lamp according to any one of the preceding claims, **characterized in that** the light distributor (6) comprises parts (8) disposed on either side of said V-shaped wall part (7) which parts are connected to the cover (2) on sides facing away from the V-shaped wall part (7).

6. A bicycle lamp according to any one of the preceding claims, **characterized in that** a line of curvature bounds the cover (2), wherein the V-shaped wall part (7) touches the line of curvature at the central light axis (10).

## Patentansprüche

1. Fahrradleuchte (1) mit einer Lichtquelle (3), welche sich entlang einer zentralen Achse (10) erstreckt, insbesondere einer Leuchtdiode (3) und einer vor der Lichtquelle (3) angeordneten Abdeckung (2), welche einen Lichtverteiler (6) umfasst, **dadurch gekennzeichnet, dass** der Lichtverteiler (6) mindestens ein Wandstück (7) umfasst, welcher sowohl an einer der Lichtquelle (3) zugewandten Seite, als auch an einer der Lichtquelle (3) abgewandten Seite V-förmig ist, wobei das V-förmige Wandstück (7) einander zugewandte innere Oberflächen (9) aufweist, welche auf der der Lichtquelle (3) zugewandten Seite angeordnet sind, wobei sich die inneren Oberflächen (9) in der zentralen Lichtachse (10) kreuzen, worin das V-förmige Stück (7) weiter äußere Oberflächen (11) umfasst, welche auf der der Lichtquelle (3) abgewandten Seite angeordnet sind, wobei die äußeren Oberflächen (11) parallel zu den inneren Oberflächen (9) sind.

2. Fahrradleuchte nach Anspruch 1 **dadurch gekennzeichnet, dass** sich die Oberflächen (9, 11) im wesentlichen parallel zu einer vertikalen Achse (7), welche sich transvers zu der zentralen Lichtachse erstreckt, erstrecken.

3. Fahrradleuchte nach Anspruch 1 oder 2 **dadurch gekennzeichnet, dass** die Oberflächen (9, 11) konvex sind.

4. Fahrradleuchte nach Anspruch 3, **dadurch gekennzeichnet, dass** sich eine Seite des V-förmigen Wandstücks (7), welches von der Lichtquelle (3) weggerichtet ist, in Bezug auf die Oberflächen konzentrisch erstreckt.

5. Fahrradleuchte nach einem der vorangegangenen Ansprüche **dadurch gekennzeichnet, dass** der Lichtverteiler (6) Teil (8) umfasst, welche zu beiden Seiten des V-förmigen Wandstücks (7) angeordnet sind, wobei die Teile auf von dem V-förmigen Wandstück (7) weggerichteten Seiten mit der Abdeckung (2) verbunden sind.

6. Fahrradleuchte nach einem der vorangegangenen Ansprüche **dadurch gekennzeichnet, dass** eine Krümmungslinie die Abdeckung (2) begrenzt, worin das V-förmige Wandstück (7) die Krümmungslinie in der zentralen Achse (10) berührt.

## Revendications

1. Feu pour bicyclette (1) comprenant une source lumineuse (3) s'étendant le long d'un axe lumineux central (10), en particulier une diode électroluminescente (3) et un couvercle (2) disposé en face de la source lumineuse (3) qui comprend un répartiteur de lumière (6), **caractérisé en ce que** le répartiteur de lumière (6) comprend au moins une partie formant cloison (7) qui est en forme de V à la fois d'un côté faisant face à la source lumineuse (3) et d'un côté opposé à la source lumineuse (3), laquelle partie formant cloison (7) en forme de V comprend des surfaces internes (9) se faisant face, placées sur le côté faisant face à la source lumineuse (3), lesquelles surfaces internes (9) se coupent au niveau de l'axe lumineux central (10), et dans lequel la partie (7) en forme de V comprend en outre des surfaces externes (11) placées du côté opposé à la source lumineuse (3), lesquelles surfaces externes (11) sont parallèles aux surfaces internes (9).

2. Feu pour bicyclette selon la revendication 1, **caractérisé en ce que** lesdites surfaces (9, 11) s'étendent de façon sensiblement parallèle à un axe vertical (7) s'étendant transversalement audit axe lumineux central.

3. Feu pour bicyclette selon la revendication 1 ou 2, **caractérisé en ce que** lesdites surfaces (9, 11) sont convexes.

4. Feu pour bicyclette selon la revendication 3, **caractérisé en ce qu'**un côté de la partie formant cloison (7) en forme de V tournée du côté opposé à la source lumineuse (3) s'étend de manière concentrique par rapport auxdites surfaces.

5. Feu pour bicyclette selon l'une quelconque des revendications précédentes, **caractérisé en ce que** le répartiteur de lumière (6) comprend des parties (8) disposées de part et d'autre de ladite partie formant cloison (7) en forme de V, lesquelles parties se raccordent au couvercle (2) sur les côtés tournés du côté opposé à la partie formant cloison (7) en forme de V.

6. Feu pour bicyclette selon l'une quelconque des revendications précédentes, **caractérisé en ce qu'**une ligne de courbure enveloppe le couvercle (2), dans lequel la partie formant cloison (7) en forme de V touche la ligne de courbure au niveau de l'axe lumineux central (10).
